# EUROPÄISCHE PATENTSCHRIFT

(11) **EP 2 193 876 B1**
(45) Veröffentlichungstag und Bekanntmachung des Hinweises auf die Patenterteilung: **07.09.2011**
(21) Anmeldenummer: 08020957.0
(22) Anmeldetag: 03.12.2008
(51) Int. Cl.: B23Q 1/70, B23Q 11/00, F16C 35/00

(54) **Motorspindel mit einem vorderen Festlager**
Motor spindle with a previous fixed bearing
Broche de moteur dotée d'un palier fixe avant

(43) Veröffentlichungstag der Anmeldung: 09.06.2010
(73) Patentinhaber: Franz Kessler GmbH, 88422 Bad Buchau (DE)
(72) Erfinder: Rondé, Uwe, Dr.-Ing., 88422 Bac Buchau (DE); Mayer, Anton, Dr., 88348 Bad Saulgau (DE)
(74) Vertreter: Roth, Klaus

(56) Entgegenhaltungen:
- WO-A-02/21004
- DE-A1-102005 043 954
- FR-A- 964 553
- FR-A- 2 207 781
- GB-A- 1 394 931
- GB-A- 1 497 151
- US-A- 2 586 126

## Beschreibung

Die Erfindung betrifft eine Motorspindel mit einer wenigstens eine Haltevorrichtung zum Halten eines Werkzeugs und/oder eines Werkstücks in einer Bearbeitungsphase umfassenden, drehbar gelagerten Motorwelleneinheit nach dem Oberbegriff des Anspruchs 1.

### Stand der Technik

Bei Werkzeugmaschinenspindeln werden üblicherweise zwei voneinander beabstandete Lagerungen der Spindelwelle vorgesehen. Eine erste, vordere Lagerung ist im Bereich der Werkzeug- bzw. Werkstückaufnahme angeordnet und eine zweite Lagerung ist am gegenüber liegenden bzw. hinteren Bereich der Spindelwelle angeordnet.

Solche Motorspindel sind z.B. aus den Dokumenten WO 02/21004 und US 2,586,126 bekannt.

Üblicherweise werden aufgrund der speziellen Anforderung an Werkzeugmaschinenspindeln und insbesondere bei modernen, leistungsstarken und hohe Drehzahlen aufweisenden Motorspindeln spezielle Spindellager bzw. Schrägkugellager verwendet. Da diese Lager Radialkräfte allerdings nur aufnehmen können, wenn sie gleichzeitig axial belastet sind, werden derartige Schrägkugellager in verschiedensten Anordnungen so verwendet, dass die daraus entstehenden Lagergruppen die notwendige Vorspannkraft gegenseitig aufbringen. Das heißt, dass jede der Lagerungen im Allgemeinen jeweils aus einem Lagerpaar besteht.

Im vorderen Bereich der Spindel bzw. Motorspindel ist im Allgemeinen ein Festlager vorgesehen. Mit Hilfe eines Festlagers wird eine Fixierung in zwei Translationsfreiheitsgraden realisiert. Das heißt, dass sowohl in radialer als auch in axialer Richtung diese Lagerstelle bzw. die entsprechenden Bauteile fixiert sind. Im hinteren bzw. entgegen gesetzten Bereich der Spindel, insb. Motorspindel, wird im Allgemeinen ein Loslager vorgesehen. Bei einem Loslager ist eine axiale Verschiebung der Lagerstelle bzw. der entsprechenden Bauteile möglich. Dementsprechend wird die Spindelwelle durch das Festlager an ihrer Position gehalten und das Loslager ermöglicht beispielsweise eine Wärmedehnung in Längsrichtung.

Es hat sich jedoch in der Praxis gezeigt, dass bei bisherigen Anordnungen, vor allem in besonderen Belastungssituationen wie zum Beispiel bei Stresssituation wie bei einem Werkzeug- bzw. Werkstückbruch, die Fähigkeit Radialkräfte aufzunehmen, sehr begrenzt bzw. zu gering ist. So kommt es häufig bei derartigen Situationen zu irreversiblen Schädigungen der Lagerungen und somit zu der Notwendigkeit, die in der Werkzeugmaschine montierte Spindel auszutauschen und zu reparieren. Hohe Kosten und Verfügbarkeitsausfälle der ganzen Maschine sind die Konsequenzen.

### Aufgabe und Vorteile der Erfindung

Aufgabe der Erfindung ist es demgegenüber, eine Motorspindel vorzuschlagen, die eine höhere Betriebssicherheit aufweist und auch mit sehr hohen Drehzahlen betrieben werden kann.

Diese Aufgabe wird, ausgehend von einer Motorspindel der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Motorspindel dadurch aus, dass das im Bereich der Haltevorrichtung angeordnete, vordere Festlager zumindest ein Rollenlager sowie wenigstens ein Kugellager umfasst. Mit der vorteilhaften Verwendung eines Rollenlagers in Kombination mit wenigstens einem oder zwei Kugellagern für das vordere Festlager wird erreicht, dass sehr hohe Radialkräfte bzw. senkrecht zur Drehachse gerichtete Kräfte aufgenommen werden können und zugleich eine Aufnahme von axialen Kräften bzw. eine Fixierung in Richtung der Drehachse realisiert wird. Dementsprechend führen besonders große Radialbelastungen beispielsweise bei einem Werkzeugbruch nicht zu einer Beeinträchtigung des vorderen Festlagers, so dass die Betriebssicherheit der erfindungsgemäßen Motorspindel entscheidend verbessert wird.

Vorzugsweise ist das Rollenlager als Zylinderrollenlager ausgebildet. Es können jedoch auch für spezielle Ausführungen Kegelrollenlager, Tonnenrollenlager oder Pendelrollenlager als auch sogenannte Nadellager eingesetzt werden.

In besonderen Weiterbildungen der Erfindung wird wenigstens ein Wälzkörper bzw. eine Rolle aus einem keramischen Material, wie zum Beispiel Siliziumcarbid oder dergleichen, hergestellt. Vorzugsweise sind alle Rollen- bzw. Wälzkörper als keramische Körper ausgebildet. Hierdurch wird die Temperaturbeständigkeit der Lagerung verbessert, was wiederum zu einer höheren Betriebssicherheit der erfindungsgemäßen Motorspindel führt. Dies ist besonders bei sehr schnelllaufenden Werkzeugmaschinenspindeln bzw. Motorspindeln von Bedeutung.

Generell kann die erfindungsgemäße Motorspindel auch als sogenannte gegengekoppelte Motorspindel ausgebildet werden, da auch bei letzterer die Betriebssicherheit verbessert wird.

Das Rollenlager des vorderen Festlagers ist als (im Wesentlichen reines) Radiallager zur (im Wesentlichen ausschließlichen) Aufnahme von senkrecht zur Drehachse bzw. radial ausgerichteten Kräften ausgebildet. Das oder die Kugellager des vorderen Festlagers sind in einer besonderen Weiterbildung der Erfindung als (im Wesentlichen reines) Axiallager zur (im Wesentlichen ausschließlichen) Aufnahme von Kräften in Richtung der Wellenachse bzw. in axiale Richtung ausgebildet. Diese vorteilhafte Entkopplung der beiden Freiheitsgrade auf das Rollenlager und auf das/die Kugellager führt zu einer weiteren Erhöhung der Betriebssicherheit.

Vorzugsweise ist ein Elastomerelement in radialer Richtung zwischen dem bzw. den Kugellagern des Festlagers und einem Gehäuseelement der Motorspindel vorgesehen bzw. angeordnet. Hiermit wird eine vorteilhafte Entkopplung des/der Kugellager des Festlagers in radialer Richtung realisierbar, so dass diese Komponenten des Festlagers nicht radial belastbar sind bzw. werden. Entsprechend muss das erfindungsgemäße Rollenlager die radialen Kräfte aufnehmen, was zu einer Schonung der Kugellager des vorderen Festlagers und somit zu einer langen Lebensdauer führt.

Der radiale Abstand bzw. die Dicke des Elastomerelementes ist in vorteilhafter Weise derart auszubilden, dass dieser bzw. diese größer ist als eine mögliche Temperaturausdehnung im Betrieb. Dies ist vor allem bei schnelllaufenden, modernen Motorspindeln mit hoher Leistung mit großer Abwärmeentwicklung von großer Bedeutung, da die Temperaturbelastung bislang häufig zu einer Begrenzung der Maximaldrehzahl geführt hat, was von Nachteil war.

Zur Verbesserung der Temperaturbeständigkeit vor allem des Rollenlagers ist u.a. von Vorteil, dass der Außenring bzw. die äußere Kontaktfläche des Rollenlager zu einem Gehäuseelement der Motorspindel nicht vollflächig, sondern nur zu einem Teil Berührung aufweist. Dies kann beispielsweise durch wenigstens eine oder mehrere Ausnehmungen des Außenrings und/oder des entsprechenden Gehäuseelementes realisiert werden. Vorzugsweise wird hierfür eine im Wesentlichen vollumfänglich ausgebildete Ringnut oder dergleichen vorgesehen. Hierdurch kann der Außenring des Rollenlagers "atmen" bzw. kühlen, d.h. in vorteilhafter Weise Wärme abgeben, was zu einer höheren Temperaturbeständigkeit bzw. zu einer geringeren Temperaturbelastung führt.

Eine entsprechende Wirkung kann alternativ oder in Kombination hierzu auch dadurch erzeugt werden, dass einzelne Rollen- bzw. Wälzkörper des Rollenlagers aus dem Lager entnommen werden, beispielsweise jede zweite Rolle. Auch können vorteilhafte Modifikationen an den Käfigen vorgesehen werden und/oder wie bereits erwähnt, vor allem keramische Werkstoffe für die Rollen eingesetzt werden.

### Ausführungsbeispiel

Ein Ausführungsbeispiel ist in der Zeichnung dargestellt und wird anhand der Figuren nachfolgend näher erläutert.

Im Einzelnen zeigt:
- Figur 1: einen schematischen Ausschnitt von einer Motorspindel mit erfindungsgemäßem Festlager,
- Figur 2: eine schematische, vergrößerte Detaildarstellung aus Figur 1 und
- Figur 3: zwei weitere, schematische erfindungsgemäße Festlager.

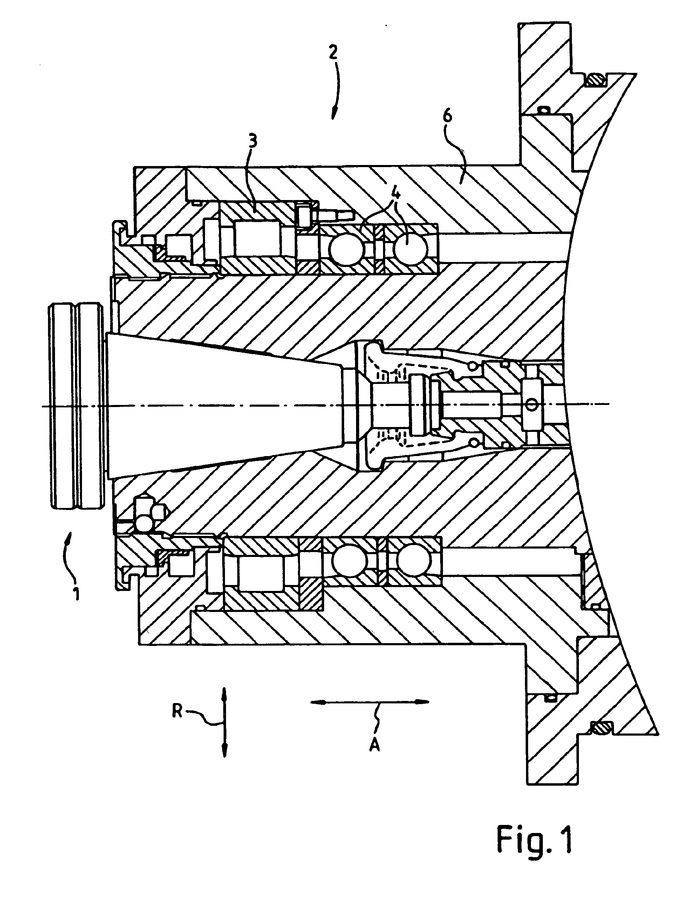

In Figur 1 ist ein Teil einer Werkzeugmaschine bzw. eine Motorspindel mit einer werkzeughalterung 1 schematisch dargestellt. Ein vorderes Festlager 2 weist ein Rollenlager 3 und zwei Kugellager 4 auf. Die beiden Kugellager 4 sind in 0-Anordnung oder in X-Anordnung realisiert.

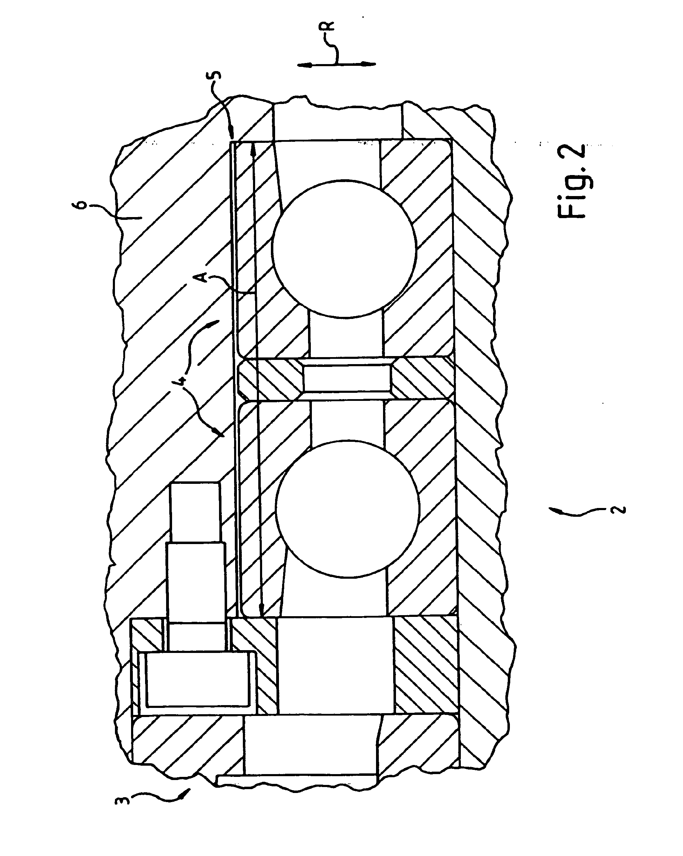

Vor allem in Figur 2 wird ein Abstand 5 erkennbar, der die beiden Kugellager 4 in radialer Richtung R gegenüber dem Statorelement 6 frei stellt. Die Dicke des Abstandes 5 ist mindestens so groß bzw. größer als die maximale Temperaturausdehnung der Kugellager 4, so dass auch im Betrieb keine radialen Kräfte vom Kugellager 4 aufgenommen bzw. weitergeleitet werden können. Beispielsweise ist der Abstand 5 größer als ca. 1/10 Millimeter.

Die Kugellager 4 können lediglich in Axialrichtung A Kräfte aufnehmen. D.h. die Kugellager sind als reines Axiallager realisiert.

Das Rollenlager 3 ist jedoch als Radiallager ausgebildet und kann sehr hohe radiale Belastungen ohne Beeinträchtigungen aufnehmen. Folglich ist die Kombination des Rollenlagers 3 und der Kugellager 4 ein Festlager mit sehr hoher radialer und axialer Belastbarkeit.

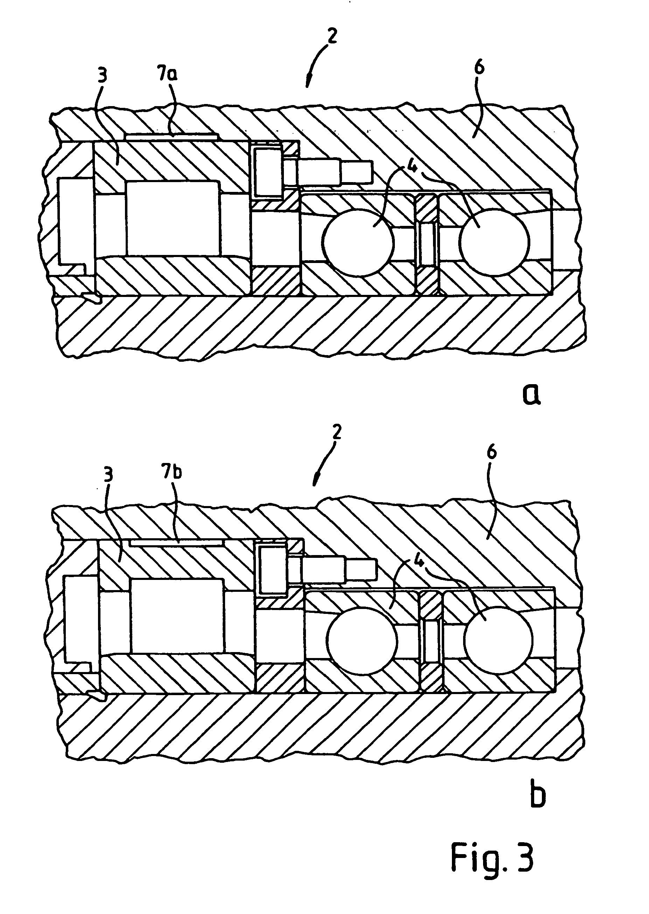

Die beiden in den Figuren 3a und 3b aufgeführten Ausführungsvarianten zeigen jeweils eine Eindrehung 7a bzw. 7b im Bereich des Rollenlagers 3. In Figur 3a umfasst ein Lagergehäuse bzw. ein Statorelement 6 die Eindrehung 7 und in Figur 3b umfasst das Rollenlager 3 bzw. dessen Außenring die Eindrehung 7.

Generell hat ein Rollenlager 3 jedoch den Nachteil, dass die bei der Rotation entstehenden Verluste aufgrund der Linienberührung im Lager im Vergleich zur Punktberührung bei Kugellagern 4 deutlich größer ist. Durch die erfindungsgemäße Ausgestaltung des Rollenlagers 3 wird jedoch diese geringere prinzipielle Drehzahlneigung wieder ausgleichbar. Der Vorteil der Linienberührung ist jedoch eine um den Faktor 5 bis 10 höhere Radialsteifigkeit und somit eine deutlich größere Überlastfähigkeit des erfindungsgemäßen Lagers 2.

Eine hintere, nicht näher dargestellte Lagerung bzw. ein Loslager gemäß der Erfindung kann in herkömmlicher Weise realisiert werden. Das bedeutet, dass sowohl ein einzelnes Kugellager, ein Kugellagerpaar oder auch ein Rollenlager, insbesondere ein Zylinderrollenlager, vorgesehen werden kann.

Von Vorteil ist hierbei die axiale Freistellung des Loslagers bzw. der Kugellager 4, um u.a. auch Temperaturausdehnungen etc. zu kompensieren. Beispielsweise kann bei einem . Rollenlager für das Loslager entweder die Innenring- oder die Außenringlaufbahn glatt ausgebildet werden, so dass die Motorwelle entsprechend axial beweglich ist und ohne dass zusätzliche Bauelemente zur Sicherstellung dieser Wellenlager erforderlich sind.

Beim vorderen Festlager 2 gemäß der Erfindung kann bei der Verwendung von zwei Kugellagern 4 diese sowohl in sogenannter X- oder O-Anordnung realisiert werden. Vorteilhaft ist hierbei die Freistellung der Außenringe dieser Kugellager beim Festlager 2, das heißt es erfolgt eine radiale Zentrierung, aber die Lager können keine Radialkräfte aufnehmen und in das Gehäuse weiter leiten. Hierdurch erfolgt eine strikte Trennung zwischen Radialkraftaufnahme durch das Rollenlager und Axialkraftaufnahme durch das Kugellagerpaar.

## Patentansprüche

1. Motorspindel mit einer wenigstens einer Haltevorrichtung (1) zum Halten eines Werkzeuges und/oder eines Werkstücks in einer Bearbeitungsphase umfassenden, drehbar gelagerten Motorwelleneinheit, wobei zum Lagern der Motorwelleneinheit wenigstens ein Loslager, insbesondere Kugellager, sowie ein vom Loslager beabstandetes, im Bereich der Haltevorrichtung (1) angeordnetes, vorderes Festlager (2) vorgesehen sind, wobei das im Bereich der Haltevorrichtung (1) angeordnete, vordere Festlager (2) zumindest ein Rollenlager (3) sowie wenigstens ein Kugellager (4) umfasst, **dadurch gekennzeichnet, dass** zwischen dem oder den Außenringen des/der Kugellager (4) des Festlagers (2) und einem Lagergehäuse (6) der Motorspindel in radialer Richtung ein Abstand (5) vorgesehen ist, so dass keine radialen Kräfte von Kugellager (4) aufgenommen bzw. weitergeleitet werden können.

2. Motorspindel nach Anspruch 1, **dadurch gekennzeichnet, dass** das Rollenlager (3) als Zylinderrollenlager ausgebildet ist.

3. Motorspindel nach einem der vorgenannten Ansprüche, **dadurch gekennzeichnet, dass** das im Bereich der Haltevorrichtung (1) angeordnete, vordere Festlager (2) ein Rollenlager (3) sowie zwei Kugellager (4) umfasst.

4. Motorspindel nach einem der vorgenannten Ansprüche, **dadurch gekennzeichnet, dass** der Abstand (5) gleich oder größer als eine im Betrieb realisierbare maximale Temperaturausdehnung des/der Kugellager (4) und/oder des Lagergehäuses (6) ist.

5. Motorspindel nach einem der vorgenannten Ansprüche, **dadurch gekennzeichnet, dass** zwischen dem und/oder den Kugellagern (4) des Festlagers (2) und einem Lagergehäuse (6) der Motorspindel in radialer Richtung ein Elastomerelement angeordnet ist.

6. Motorspindel nach einem der vorgenannten Ansprüche, **dadurch gekennzeichnet, dass** eine in radialer Richtung gerichtete Dicke des Elastomerelementes größer als eine im Betrieb realisierbare maximale Temperaturausdehnung des/der Kugellager (4) und/oder des Lagergehäuses (6) ist.

7. Motorspindel nach einem der vorgenannten Ansprüche, **dadurch gekennzeichnet, dass** das Elastomerelement im Wesentlichen aus Kautschuk und/oder Silikonmaterial besteht.

8. Motorspindel nach einem der vorgenannten Ansprüche, **dadurch gekennzeichnet, dass** zwischen dem Rollenlager (3) des Festlagers (2) und einem Lagergehäuse (6) der Motorspindel wenigstens zwei, von zumindest einer Ausnehmung (7) getrennte Kontaktflächen vorgesehen sind.

9. Motorspindel nach einem der vorgenannten Ansprüche, **dadurch gekennzeichnet, dass** die Ausnehmung (7) eine im Wesentlichen über den gesamten Umfang des Rollenlagers (3) ausgebildete Ringnut ist.

10. Motorspindel nach einem der vorgenannten Ansprüche, **dadurch gekennzeichnet, dass** das Rollenlager (3) die Ausnehmung (7) umfasst.

11. Motorspindel nach einem der vorgenannten Ansprüche, **dadurch gekennzeichnet, dass** das Lagergehäuse (6) der Motorspindel die Ausnehmung (7) umfasst.

12. Motorspindel nach einem der vorgenannten Ansprüche, **dadurch gekennzeichnet, dass** die in axialer Richtung gerichtete Breite der Ausnehmung (7) im Wesentlichen gleich oder größer als die Länge der Rollen des Rollenlagers (3) ist.

## Claims

1. Motor spindle comprising a rotary mounted motor shaft unit comprising at least one holding device (1) for holding a tool and/or a workpiece in a processing phase, wherein for supporting the motor shaft unit at least one floating bearing, in particular a ball bearing, and a front fixed bearing (2) spaced apart from the floating bearing and arranged in the region of the holding device (1) are provided, wherein the front fixed bearing (2) arranged in the region of the holding device (1) comprises at least one roller bearing (3) and at least one ball bearing (4), **characterised in that** between the outer ring or rings of the ball bearing or bearings (4) of the fixed bearing (2) and a bearing housing (6) of the motor spindle a spacing (5) is provided in radial direction, so that no radial forces can be received or passed on by the ball bearing (4).

2. Motor spindle according to claim 1, **characterised in that** the roller bearing (3) is designed as a cylinder roller bearing.

3. Motor spindle according to one of the preceding claims, **characterised in that** the front fixed bearing (2) arranged in the region of the holding device (1) comprises a roller bearing (3) and two ball bearings (4).

4. Motor spindle according to one of the preceding claims, **characterised in that** the spacing (5) is equal to or greater than a maximum temperature expansion achievable during operation of the ball bearing/bearings (4) and/or of the bearing housing (6).

5. Motor spindle according to one of the preceding claims, **characterised in that** between the ball bearing and/or bearings (4) of the fixed bearing (2) and a bearing housing (6) of the motor spindle an elastomer element is arranged in radial direction.

6. Motor spindle according to one of the preceding claims, **characterised in that** a thickness of the elastomer element directed in radial direction is greater than a maximum temperature expansion achievable during operation of the ball bearing/bearings (4) and/or the bearing housing (6).

7. Motor spindle according to one of the preceding claims, **characterised in that** the elastomer element is made essentially of rubber and/or silicon material.

8. Motor spindle according to one of the preceding claims, **characterised in that** between the roller bearing (3) of the fixed bearing (2) and a bearing housing (6) of the motor spindle at least two contact surfaces separated by at least one recess (7) are provided.

9. Motor spindle according to one of the preceding claims, **characterised in that** the recess (7) is an annular groove formed essentially over the entire circumference of the roller bearing (3).

10. Motor spindle according to one of the preceding claims, **characterised in that** the roller bearing (3) comprises the recess (7).

11. Motor spindle according to one of the preceding claims, **characterised in that** the bearing housing (6) of the motor spindle comprises the recess (7).

12. Motor spindle according to one of the preceding claims, **characterised in that** the width of the recess (7) directed in axial direction is essentially equal to or greater than the length of the rollers of the roller bearing (3).

## Revendications

1. Broche de moteur comportant une unité d'arbre de moteur montée à rotation, ayant au moins un dispositif de maintien (1) pour tenir un outil et/ou une pièce en phase d'usinage,
- au moins un palier libre, notamment un palier à billes ainsi qu'un palier fixe avant (2) distant du palier libre, étant prévus dans la zone du dispositif de maintien (1) pour recevoir l'unité d'arbre de moteur,
- le palier fixe (2) avant, installé dans la zone du dispositif de maintien (1), comporte au moins un palier à rouleaux (3) et au moins un palier à billes (4),
broche **caractérisée en ce qu'**
un intervalle (5) sépare le ou les bagues extérieures du ou des paliers à billes (4) du palier fixe (2), et un boîtier de palier (6) de la broche de moteur dans la direction radiale, pour que le palier à billes (4) ne reçoive aucun effort radial respectivement ne puisse transmettre aucun effort radial.

2. Broche de moteur selon la revendication 1,
**caractérisée en ce que**
le palier à rouleaux (3) estdu type d'un palier à rouleaux cylindriques.

3. Broche de moteur selon l'une des revendications précédentes,
**caractérisée en ce que**
le palier fixe avant (2) dans la zone du dispositif de maintien (1) comprend un palier à rouleaux (3) et deux paliers à billes (4).

4. Broche de moteur selon l'une des revendications précédentes,
**caractérisée en ce que**
la distance (5) est égale ou supérieure à la dilatation thermique maximale générée pendant le fonctionnement du ou des paliers à billes (4) et/ou du boîtier de palier (6).

5. Broche de moteur selon l'une des revendications précédentes,
**caractérisée en ce qu'**
un élément en élastomère est prévu dans la direction radiale entre le et/ou les paliers à billes (4) du palier fixe (2) et un boîtier de palier (6) de la broche de moteur.

6. Broche de moteur selon l'une des revendications précédentes,
**caractérisée en ce que**
l'épaisseur de l'élément élastomère dans la direction radiale, est supérieure à la dilatation thermique maximale générée pendant le fonctionnement du palier à billes (4) et/ou du boîtier de palier (6).

7. Broche de moteur selon l'une des revendications précédentes,
**caractérisée en ce que**
l'élément en élastomère est principalement en caoutchouc et/ou en silicone.

8. Broche de moteur selon l'une des revendications précédentes,
**caractérisée par**
au moins deux surfaces de contact séparées par au moins une cavité (7), sont prévues entre le palier à rouleaux (3) du palier fixe (2) et un boîtier de palier (6) de la broche de moteur.

9. Broche de moteur selon l'une des revendications précédentes,
**caractérisée en ce que**
la cavité (7) est une rainure annulaire réalisée pratiquement sur toute la surface périphérique du palier à rouleaux (3).

10. Broche de moteur selon l'une des revendications précédentes,
**caractérisée en ce que**
le palier à rouleaux (3) comprend la cavité (7).

11. Broche de moteur selon l'une des revendications précédentes,
**caractérisée en ce que**
le boîtier de palier (6) de la broche de moteur, comprend la cavité (7).

12. Broche de moteur selon l'une des revendications précédentes,
**caractérisée en ce que**
la largeur de la cavité (7) dans la direction axiale, est pratiquement égale ou supérieure à la longueur des rouleaux du palier à rouleaux (3).
